Europäisches Patentamt

European Patent Office

Office européen des brevets

(19)

(11) Numéro de publication: **0 231 706**
**B1**

(12) **FASCICULE DE BREVET EUROPEEN**

(45) Date de publication du fascicule du brevet:
**01.03.89**

(21) Numéro de dépôt: **86402909.5**

(22) Date de dépôt: **23.12.86**

(51) Int. Cl.⁴: **B01J 19/24,** B01J 12/00,
B01F 5/00, C07C 29/15
// C01B3/34, C07C120/14

(54) **Procédé et réacteur d'oxydation d'une charge oxydable en phase gazeuse.**

(30) Priorité: **30.12.85 FR 8519431**

(43) Date de publication de la demande:
**12.08.87 Bulletin 87/33**

(45) Mention de la délivrance du brevet:
**01.03.89 Bulletin 89/9**

(84) Etats contractants désignés:
**DE FR GB IT NL**

(56) Documents cités:
**EP-A- 0 121 445**
**US-A- 2 621 117**
**US-A- 3 741 533**
**US-A- 4 381 187**

(73) Titulaire: **INSTITUT FRANCAIS DU PETROLE, 4, Avenue de Bois-Préau, F-92502 Rueil-Malmaison(FR)**

(72) Inventeur: **Alagy, Jacques, 24, chemin Beckensteiner, F-69260 Charbonnières les Bains(FR)**
Inventeur: **Busson, Christian, Chemin de Cogny, F-67570 Dardilly(FR)**

(74) Mandataire: **Aubel, Pierre et al, Institut Français du Pétrole Département Brevets 4, avenue de Bois Préau, F-92502 Rueil-Malmaison(FR)**

EP 0 231 706 B1

**Description**

La présente invention concerne un nouveau procédé d'oxydation d'une charge oxydable en phase gazeuse par un mélange de gaz contenant au moins un gaz oxydant, ainsi qu'un réacteur pour la mise en oeuvre de ce procédé.

Elle s'applique plus spécialement à l'oxydation lente et partielle de charges oxydables telles que, par exemple, des hydrocarbures, en vue de la préparation de gaz de synthèse comprenant essentiellement du monoxyde de carbone et de l'hydrogène pour la synthèse, par exemple, de méthanol et d'alcools homologues supérieurs. Elle peut s'appliquer aussi par exemple, à l'oxydation des effluents de réformage à la vapeur, du benzène, ou aux réactions d'ammonoxydation.

Bien que les gaz oxydants puissent être notamment l'oxygène, l'ozone ou les halogènes, on ne considérera à titre d'exemple, que les réactions avec l'oxygène.

Il est connu de réaliser une oxydation partielle du méthane, comme indiqué, par exemple, dans le brevet US-A 2 621 117.

La réaction se fait dans une flamme où le mélange des gaz n'est jamais parfait. Dans ces conditions, on atteint rapidement des températures élevées dans les zones riches en oxygène.

Les gaz produits à haute température sont ensuite mélangés dans une zone riche en charge à oxyder et provoquent le craquage des molécules avec formation de carbone susceptible, par exemple, d'encrasser des catalyseurs dans la suite du procédé et donc de diminuer le rendement de la réaction.

Dans le cas du méthane, on observe une production de carbone et les gaz de synthèse doivent être ultérieurement dépoussiérés avant leur utilisation, par exemple pour la synthèse du méthanol à partir de l'oxyde de carbone et de l'hydrogène.

Outre la formation de noir de carbone, il peut se produire une surchauffe excessive de la zone où s'effectue le contact des gaz réactionnels et dans un grand nombre de cas, ces effets indésirables sont essentiellement attribuables au dispositif de mélange des gaz réactionnels à l'entrée du réacteur, le mélange des gaz étant effectué à une vitesse trop lente par rapport à la vitesse de réaction en phase gazeuse.

C'est le cas lorsque l'oxygène est injecté à travers un seul canal qui doit d'ailleurs avoir une section suffisante pour admettre la totalité du débit et, bien que le gaz soit injecté à grande vitesse à travers cette section, la vitesse de dispersion des molécules d'oxygène est lente, comparée à celle de la réaction.

De plus, le jet d'oxygène à l'endroit où il sort de son orifice, est généralement dans l'environnement du gaz à oxyder qui circule à faible vitesse dans le réacteur, ce qui n'est pas favorable à une dispersion rapide des molécules d'oxygène.

Le brevet Européen EP-B 0 001 946 décrit un réacteur où l'oxygène, étant donné son débit important, est injecté dans le gaz de procédé par l'intermédiaire d'une multitude de canaux parallèles, chacun de ces canaux se terminant par un orifice de sortie dont l'une au moins des dimensions est très réduite, tel qu'une fente dont la largeur est de préférence inférieure à 8 mm.

De plus, afin d'augmenter la vitesse de dispersion de l'oxygène dans le gaz de procédé, celui-ci est animé d'un violent mouvement hélicoïdal autour desdits canaux, obtenu par une injection tangentielle de ce gaz sur les parois intérieures de l'appareil.

En outre, les brevets US-A 4 381 187 et US-A 3 741 533 illustrent l'arrière-plan technologique.

Par ailleurs, il est bien connu, notamment par le livre de G. de Soete et A. Feugier: "Aspects physiques et chimiques de la combustion" Editions Technip, pages 87 à 93, d'utiliser l'effet de paroi pour diminuer la vitesse réactionnelle et éviter la propagation de la flamme.

Dans le cas présent, la présence d'oxygène pur et la température élevée impliquant un flux thermique élevé nécessitent des dispositifs d'arrêt de flamme permettant à la réaction de se poursuivre sans explosion, bien que l'on soit à l'intérieur des limites explosives (notamment dans le cas de l'oxydation partielle du méthane).

Les objectifs que l'on se propose d'atteindre et qui répondent aux problèmes soulevés par l'art antérieur sont essentiellement les suivants:

– une distribution en oxygène et en charge adaptée à la recherche d'un mélange quasi homogène, parfaitement contrôlée, entre l'oxygène et la charge à oxyder. Cette distribution doit être particulièrement adaptée à la dispersion rapide des molécules d'oxygène.

– un "arrêt ou coincement de flamme", évitant l'explosion et permettant cependant d'opérer à des températures pouvant atteindre plus de 1000°C, avec le souci de protéger le réacteur et le dispositif mélangeur de la chaleur excessive dégagée lors de l'oxydation partielle.

La présente invention propose un nouveau procédé remédiant aux inconvénients de l'art antérieur. Elle concerne plus précisément un procédé d'oxydation d'une charge oxydable en phase gazeuse par un mélange de gaz contenant au moins un gaz oxydant, selon lequel on effectue les étapes successives suivantes:

a) on fait circuler simultanément la charge oxydable et le gaz oxydant dans une zone de distribution en matière céramique comprenant au moins une rangée de canaux d'un premier type de façon que l'un des deux gaz constitués respectivement par la charge oxydable et le gaz oxydant circule de manière séparée à l'intérieur de ladite rangée et de façon que l'autre gaz circule de manière séparée à l'extérieur de ladite rangée, la charge oxydable et le gaz oxydant parcourant dans au moins une partie de ladite zone et avantageusement au voisinage de sa sortie une multiplicité d'espaces présentant des passages ayant, suivant au moins une direction, une dimension au plus égale à 10 millimètres correspondant à la distance de coincement de la flamme pouvant résulter de l'oxydation de ladite charge par ledit gaz oxydant,

b) on mélange ensuite ladite charge oxydable et ledit gaz oxydant ainsi distribués dans une zone de mélange en matière céramique définissant une multiplicité d'espaces présentant des passages ayant, suivant au moins une direction, une dimension comparable à celle des passages de l'étape a), et

c) on fait réagir le mélange de produits de l'étape b) dans une zone de réaction en matière céramique comprenant une pluralité d'espaces présentant des passages ayant, suivant au moins une direction, une dimension comparable à celle des passages définis dans les étapes a) et b), la distance entre la zone de distribution et la zone de mélange d'une part et entre la zone de mélange et la zone de réaction d'autre part, étant au plus égale à ladite distance de coincement de la flamme.

Les canaux de ladite rangée peuvent être juxtaposés. L'extérieur de ladite rangée peut comprendre, selon un mode de réalisation, un premier garnissage en céramique pouvant comporter, soit au moins une rangée de canaux d'un second type, soit des éléments particuliers.

Suivant ces deux modes de réalisation, l'un des deux gaz (par exemple la charge oxydable) circule à travers les canaux du premier type, tandis que l'autre gaz (par exemple le gaz oxydant) circule à travers le garnissage.

Les surfaces vis-à-vis de la zone de mélange et de la zone de distribution, d'une part, et les surfaces vis-à-vis de la zone de mélange et de la zone de réaction, d'autre part, sont avantageusement dimensionnées de telle façon que la surface de la zone de mélange soit au moins égale à celle de la zone de distribution et au plus égale à celle de la zone réactionnelle.

Avantageusement, la dimension desdits passages, correspondant à la distance de coincement de flamme sera au plus égale à 5 mm et de façon préférée comprise entre environ 0,1 à 2 mm.

La zone de distribution, la zone de mélange et la zone de réaction sont avantageusement en matière réfractaire céramique, qui peut être choisie dans le groupe comprenant la mullite, la cordiérite, les nitrures de silicium tels que $Si_3N_4$, les oxydes d'alcalinoterreux, les oxydes de métaux de transition et le carbure de silicium.

Le présent procédé conduit à des rendements améliorés, par exemple en gaz de synthèse, par rapport aux procédés existants.

L'invention concerne aussi un réacteur d'oxydation d'une charge oxydable en phase gazeuse par un mélange de gaz contenant au moins un gaz oxydant. Le réacteur comporte des moyens d'alimentation en charge oxydable et en gaz oxydant et des moyens d'évacuation des produits réactionnels.

Il comprend, en outre, en combinaison, sur une partie au moins de sa section, des organes ou moyens de distribution en matière céramique comportant au moins une rangée d'au moins un canal d'un premier type reliée aux moyens d'alimentation d'un des deux gaz (charge oxydable ou gaz oxydant) et à l'intérieur duquel circule ledit gaz, lesdits moyens de distribution comportant à l'extérieur dudit canal un premier garnissage relié aux moyens d'alimentation de l'autre gaz, l'intérieur dudit canal étant rempli en outre, d'un second garnissage, lesdits garnissages étant adaptés à définir dans au moins une partie des moyens de distribution une multiplicité d'espaces présentant des passages ayant, suivant au moins une direction, une dimension au plus égale à 10 mm, ladite rangée et ledit premier garnissage étant adaptés notamment à distribuer des nappes distinctes de la charge oxydable et de gaz oxydant dans un organe de mélange en matière céramique par leur extrémité la plus proche dudit organe de mélange, ledit organe de mélange étant adapté à mélanger ladite charge et ledit gaz oxydant et à définir tout le long dudit organe de mélange une multiplicité d'espaces présentant des passages ayant, suivant au moins une direction, une dimension au plus égale à 10 millimètres, ledit organe de mélange étant situé à une distance au plus égale à 10 millimètres d'une part de l'extrémité de ladite rangée du canal et dudit premier garnissage, et d'autre part, d'un organe de réaction en matière céramique comportant ledit second garnissage en matière céramique adapté à définir dans au moins une partie desdits moyens de réaction et avantageusement tout le long de ces moyens, une multiplicité d'espaces présentant des passages ayant, suivant au moins une direction, une dimension au plus égale à 10 millimètres grâce auxquels les produits réactionnels sont canalisés vers les moyens d'évacuation.

Par l'expression "dans au moins une partie" des moyens de distribution ou de réaction, on entend au moins au voisinage immédiat de l'organe de mélange, du côté des moyens de distribution et du côté des moyens de réaction.

Selon un premier mode de réalisation de l'organe de mélange, celui-ci comporte une pluralité d'étages à mailles sensiblement décalées les unes par rapport aux autres et remplies dudit second garnissage en matière céramique.

Selon un deuxième mode de réalisation, l'organe de mélange comporte une pluralité de plaques, de préférence sensiblement verticales, comprenant de part et d'autre de chacune d'elles une pluralité de saillies et de canalisations inclinées de manière opposée de part et d'autre de chaque plaque, lesdites plaques étant disposées de telle façon que les saillies et canalisations soient croisées.

Pour des raisons de facilité de compréhension, on décrira à titre d'exemple dans la description un réacteur où les moyens de distribution comprennent avantageusement un monolithe à multicanaux juxtaposés comportant au moins une rangée d'au moins un canal d'un premier type reliée aux moyens d'alimentation en charge oxydable, cette rangée étant en alternance avec une rangée d'au moins un canal d'un second type relié aux moyens d'alimentation en gaz oxydant, chacun des canaux étant rempli d'un garnissage adapté à définir ladite multiplicité d'espaces.

De préférence, la première rangée et la dernière rangée seront réservées à la charge oxydable.

Avantageusement, les dimensions ci-dessus et la distance de l'organe de mélange à l'extrémité ou sortie des moyens de distribution et la distance de l'organe de mélange à l'entrée de l'organe de réaction ou zone réactionnelle sont au plus égales à 5 millimètres et de façon préférée, comprise entre 0,1 et 2 mm.

Selon un mode de réalisation, les espaces sont définis par des garnissages en céramique qui peuvent comporter au moins un monolithe comprenant une pluralité de canaux juxtaposés, sensiblement parallèles de façon avantageuse, chacun des canaux ayant une section comprise entre 0,0025 et 100 mm². 

De façon préférée, les canaux relatifs au monolithe de distribution ou ceux relatifs au monolithe de la zone réactionnelle ont une section comprise entre 0,01 et 25 mm². Cette section est de forme quelconque mais préférentiellement polygonale et de façon tout particulièrement préférée, carrée ou rectangulaire.

Lorsque l'organe de mélange comporte une pluralité d'étages à mailles décalées, les canaux du monolithe disposés dans les mailles de l'organe de mélange ont une section comprise de préférence entre 0,01 et 25 mm². De même, la section des canalisations de l'organe de mélange, dans le cas des plaques disposées sensiblement dans le sens d'écoulement des gaz, mesurée une fois les plaques juxtapossées est compatible avec la distance de coincement de flamme et donc comprise entre 0,0025 et 100 mm² et de préférence entre 0,01 et 25 mm².

Cette section de canalisation peut être de forme quelconque, par exemple polygonale et de préférence carrée ou rectangulaire.

Les canalisations sont généralement inclinées de manière variable et le degré d'inclinaison peut varier de quelques degrés par rapport à la verticale à quelques degrés par rapport à l'horizontale. Il est de préférence compris entre 30 et 50 degrés.

Les plaques sont généralement de faible épaisseur pour améliorer le mélange. Elles sont généralement juxtaposées, mais elles peuvent éventuellement présenter un écartement tel qu'au niveau de l'intérieur des canalisations croisées, il reste compatible avec la distance de coincement.

Les espaces peuvent aussi être définis, selon un autre mode de réalisation par des garnissages comprenant des éléments particulaires tels que par exemple, des billes et des bâtonnets en céramique.

Dans un mode de réalisation particulièrement avantageux, les monolithes peuvent ne pas être vides, mais au moins l'un d'eux peut comporter au moins un remplissage d'éléments tels que par exemple, des billes et des bâtonnets en céramique, de dimension sensiblement inférieure à celle d'un canal unitaire, ces matériaux étant retenus au niveau des diverses zones par des grilles en matériau céramique.

De manière générale, la charge et le gaz oxydant circulent à travers les garnissages et/ou le remplissage en direction de la zone de mélange.

Les trois zones constituant le réacteur selon l'invention et notamment la zone de distribution avec au moins une rangée d'au moins un canal, peuvent être remplies par les éléments particulaires décrits ci-dessus, mais on peut concevoir de n'en remplir qu'au moins une des trois zones, en totalité ou partiellement, si par ailleurs la dimension de chaque canal unitaire dans une zone déterminée est compatible avec la distance de coincement de la flamme.

On peut, par exemple, ne remplir de billes que le monolithe de la zone réactionnelle ou bien ce dernier et le monolithe de la zone de distribution.

La taille de ces particules est généralement comprise entre 0,01 et 10 mm.

Les garnissages peuvent être également, selon encore un autre mode de réalisation, un catalyseur seul ou combiné avec le remplissage ci-dessus. Le catalyseur peut être par exemple du chlorure de cuivre et du chlorure de potassium déposés sur alumine, de l'oxyde de vanadium déposé sur alumine ou avec addition de sulfate de potassium déposé sur silice, du cérium ou du lanthane déposé sur silice, du phosphomolybdate de bismuth ou du molybdate de cobalt déposé sur silice, des oxydes métalliques (Ag et Cu par exemple) et du carbure de silicium poreux recouvert d'argent.

Les garnissages et le remplissage ci-dessus permettent de diminuer les dimensions de coincement de flamme à une valeur qu'il est difficile d'atteindre par la technologie, sans risque de malfaçon et par conséquent, de réaliser des réactions d'oxydation en présence d'oxygène pur.

Dans la zone de distribution, les rangées de canaux du premier type d'ordre par exemple n−2, n, n+1, n+3, n+5 sont parcourus par le gaz oxydant, n étant un nombre entier quelconque.

On pourrait aussi disposer de rangées de canaux ...n−2, n−1, n+2, n+3, n+6, n+7... pour la charge et de rangées ...n, n+1, n+4, n+5, n+8, n+9... pour le gaz oxydant.

Peu importe le fluide choisi pour la première rangée, il est généralement interessant de respecter l'alternance et de préférence, qu'une rangée de canaux réservés au gaz oxydant soit comprise entre les rangées réservées à la charge lorsqu'on a affaire par exemple à un monolithe dans la zone de distribution. Ceci présente l'avantage de faire consommer tout le gaz oxydant.

La zone de distribution multicanaux présente l'avantage de faire s'écouler sous forme de nappes uniformes la charge oxydable et le gaz oxydant et d'éviter le retour de flamme étant donné que la réaction d'oxydation est initiée dès la mise en mélange des fluides qui sont introduits chauds dans le réacteur.

L'organe de mélange est avantageusement disposé dans un plan sensiblement perpendiculaire à l'écoulement des gaz, mais il peut être orienté différemment.

Un nombre N élevé d'étages de mélange dûs à la présence, par exemple, de N disques de faible épaisseur, à mailles décalées ou décentrées, et de section polygonale quelconque, mais avantageusement carrée ou rectangulaire divise l'écoulement. La zone de mélange permet par conséquent, d'obtenir un micro-mélange quasi homogène parfaitement contrôlé où l'oxygène par exemple est rapidement dispersé, et une réaction d'oxydation avec arrêt de la flamme de propagation, ce qui évite le risque d'explosion.

· Enfin, la zone réactionnelle proprement dite permet l'avancement de la réaction d'oxydation, son contrôle compte tenu des niveaux thermiques atteints et l'évacuation des produits réactionnels.

Finalement, en raison de la faible section des canaux, et des mailles des divers étages ou des canalisations de l'organe de mélange et en raison également de la distance entre les divers moyens combinés du réacteur, on réalise un nouveau procédé et réacteur d'oxydation sans qu'il y ait de rétromélange, ni explosions (ou retour de flamme).

L'ensemble du dispositif en matériau réfractaire (céramique), donc de mise en oeuvre aisée est neutre vis-à-vis de la charge, du gaz oxydant et des produits réactionnels; il peut fonctionner à des températures de parois atteignant 1200 à 1500°C.

Les canaux des monolithes ont une section unitaire comprise entre 0,0025 et 100 mm² et de préférence sensiblement égale. De façon très avantageuse, ils pourront occuper toute la surface du réacteur et être par exemple de forme cylindrique lorsque le réacteur est tubulaire, mais les monolithes pourraient aussi avoir une section carrée, rectangulaire ou de toute autre forme.

Par exemple, la longueur de chaque canal unitaire est de 10 mm à 3000 mm.

Le nombre d'étages de disques, par exemple, fractionnant les nappes gazeuses de charge oxydable et de gaz oxydant peut être compris entre 6 et 50 et de préférence entre 20 et 40. Leur épaisseur unitaire varie de 1 à 10 mm et de préférence est égale à 5 mm.

On a obtenu des résultats particulièrement intéressants, sans dépôt de coke par exemple et avec un rendement maximum lorsque les surfaces situées en regard de la zone de mélange et de la zone de distribution et les surfaces en regard de la zone de mélange et de la zone de réaction sont sensiblement égales.

L'arrivée de la charge oxydable dans les rangées du premier type de canaux destinées à la distribuer dans la zone de distribution s'effectue de manière sensiblement perpendiculaire à l'axe de ces rangées, en un point intermédiaire situé à une distance de la zone de mélange comprise entre 40 et 95% de la longueur totale de la zone de distribution; par contre, l'arrivée du gaz oxydant dans les rangées du second type de canaux (premier garnissage) destinées à le distribuer dans la zone de distribution peut s'effectuer selon l'axe desdits canaux.

Il est possible d'ailleurs d'inverser les arrivées de fluide gazeux, par exemple la charge oxydable peut être introduite selon l'axe des canaux, tandis que le gaz oxydant peut être amené de manière sensiblement perpendiculaire comme dans le cas décrit ci-dessus.

On peut choisir pour la section des canaux l'une au moins des formes suivantes: carrée, rectangulaire, cylindrique, elliptique, circulaire ou triangulaire.

La charge oxydable et le gaz oxydant circulent sensiblement dans la même direction vers la zone de mélange, par exemple de bas en haut ou de haut en bas dans le cas d'un réacteur vertical, de forme tubulaire.

La charge oxydable utilisable dans le cadre de l'invention comprend, par exemple, des hydrocarbures aliphatiques saturés tels que le méthane et les effluents du procédé de réformage à la vapeur, l'orthoxylène, le naphtalène, le benzène, le méthanol, le mélange méthane-toluène et le mélange éthylène-acide chlorhydrique.

L'invention sera mieux comprise par la description de quelques modes de réalisation, donnés à titre illustratif, mais nullement limitatif, qui en sera faite ci-après à l'aide des figures annexées:

— la figure 1 représente schématiquement un mode de réalisation du procédé selon l'invention suivant une coupe longitudinale,

— les figures 2A et 2B illustrent différents modes de réalisation de la zone de distribution de la charge oxydable et du gaz oxydant,

— les figures 3A, 3B, 3C et 3D montrent une vue schématique de dessus des disques de l'organe de mélange selon trois modes de réalisation différents,

— la figure 4 illustre un organe de mélange à plaques,

— la figure 5 représente une vue schématique du second monolithe de la zone réactionnelle, et

— les figures 6 et 7 montrent deux autres modes de réalisation selon l'invention.

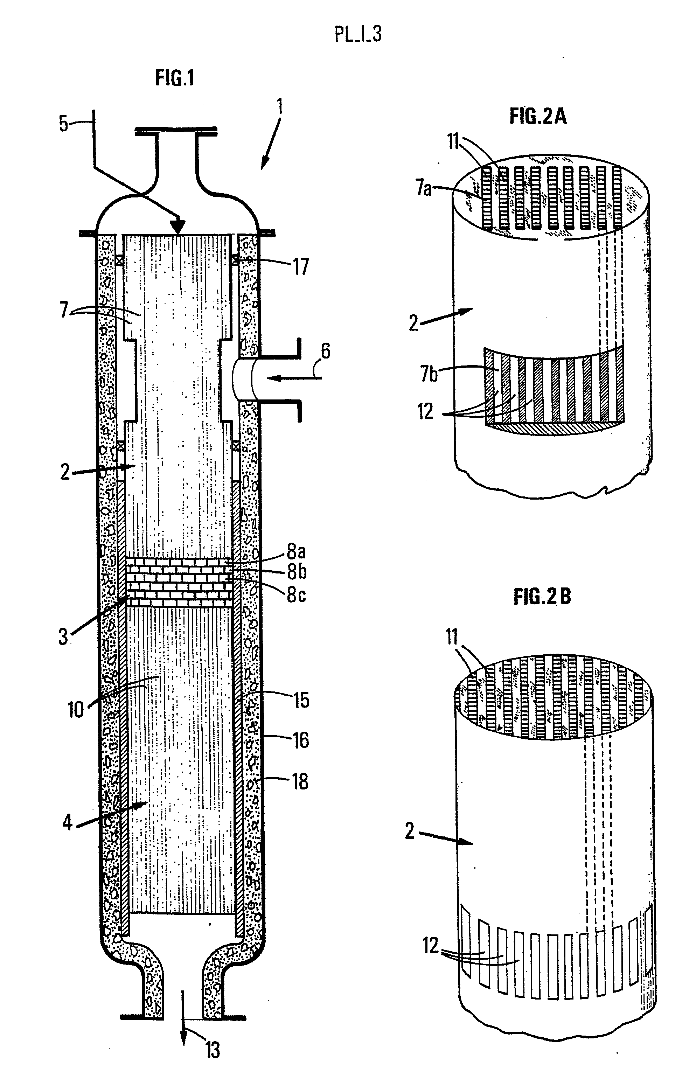

Sur la figure 1, on a représenté selon un mode de réalisation, un réacteur d'oxydation 1 vertical, cylindrique, de forme allongée comprenant un garnissage comportant un premier monolithe 2 de forme cylindrique mais dont la section utilisée est, par exemple, carrée dans lequel sont ménagés des canaux 7 en carbure de silicium, sensiblement parallèles entre eux et à l'axe du réacteur, et un mélangeur 3, par exemple en mullite constitué par une pluralité de disques 8a, 8b, 8c... de forme cylindrique, de faible épaisseur et à mailles décalées 9.

Sous ce mélangeur, se présente un second monolithe 4, de forme cylindrique mais de section utilisée semblable à celle du monolithe 2, représentant la zone réactionnelle (Fig. 5) en mullite et comportant une pluralité de canaux 10 juxtaposés, sensiblement parallèles entre eux et à l'axe du réacteur. La section individuelle de chaque canal 10, comme celle de chaque canal 7, de forme carrée par exemple, est de 1 mm² environ et leur longueur est, par exemple, d'environ 50 cm.

Ces canaux 10 sont d'une part destinés à canaliser les produits de réaction jusqu'à une ligne d'évacuation 13 et d'autre part, en raison de leur faible largeur et par effet de paroi, à "coincer la flamme", ce qui permet à la réaction de se poursuivre sans explosion.

Dans cet exemple de réalisation, la charge oxydable, préalablement chauffée aux environs de 400°C par exemple, arrive par une conduite 5 et alimente de haut en bas une pluralité de rangées 11 d'un premier type de canaux 7a (Fig. 2A).

La charge est de cette façon distribuée sous forme de nappes uniformes sensiblement parallèles entre elles et à l'axe du réacteur 1.

Le gaz oxydant préchauffé par exemple vers 150°C est également distribué sous forme de nappes uniformes sensiblement parallèles entre elles et à l'axe du réacteur 1 et circule de haut en bas dans des rangées 12 de canaux 7b du second type qui sont disposées en alternance avec les rangées 11 des canaux 7a.

L'extrémité supérieure des canaux 7b a été colmatée par une pâte en matière céramique. L'alimentation en gaz de ces rangées 12 s'effectue, par exemple suivant une direction sensiblement perpendiculaire à l'axe de ces canaux 7b, grâce à une ligne d'alimentation 6, et en un point intermédiaire sur au moins une génératrice du réacteur située à une distance de la zone de mélange 3 comprise entre 40 et 95% de la longueur totale du premier monolithe 2.

Pour atteindre les rangées 12 (Fig. 2A), on a évidé le monolithe 2 sur deux faces opposées, dans l'axe de la ligne d'arrivée 6 du gaz oxydant (non représenté sur la figure), de manière à atteindre l'aplomb des rangées 12 devant distribuer ce gaz.

Les parois ainsi mises à jour sont percées de fentes, de manière à dégager les canaux 7b sur la totalité de la profondeur de chaque rangée 12 pour permettre le passage du gaz oxydant.

On bouche à l'aide d'une pâte en céramique, au niveau de l'évidement, les canaux inutiles qui ne servent ni au passage du gaz oxydant ni à celui de la charge oxydable.

Si le premier monolithe 2 n'est pas de section carrée à la suite, par exemple, de l'obstruction de canaux par une pâte céramique aux abords de la paroi externe du réacteur, mais au contraire, suivant un autre mode de réalisation, s'il occupe toute la surface du réacteur comme le montre la figure 2B, il est possible de ne creuser la paroi du réacteur qu'au niveau des rangées 12 destinés à la distribution du gaz oxydant et de connecter ces derniers à la ligne 6 d'arrivée du gaz.

La largeur de la fente ainsi réalisée sera au plus égale à celle de chaque rangée 12. La largeur de chaque rangée peut correspondre à la largeur d'un, deux ou trois canaux suivant la dimension de la maille du mélangeur.

Les nappes de gaz oxydant et de charge oxydable se présentent en alternance et sont mises en contact dans le mélangeur 3.

La réaction d'oxydation est initiée dès ce stade, d'autant plus que les fluides ont été préchauffés. Pour éviter tout emballement de la réaction et, par suite, toute explosion, la section de chaque canal unitaire n'est pas quelconque, mais égale à une valeur comprise entre 0,0025 et 100 mm² correspondant à la dimension de coincement de flamme.

De même, la section de chaque maille ou canal de monolithe 9 au niveau de chaque disque 8 du mélangeur 3 doit être telle qu'elle correspond à une dimension au plus égale à la distance de coincement de flamme. Enfin, la distance entre le premier monolithe et le mélangeur est au plus égale à 10 mm, distance que l'on retrouve aussi, pour les mêmes raisons, entre le mélangeur 3 et le second monolithe 4.

Avantageusement, les surfaces vis-à-vis de la zone de mélange et de la zone de distribution d'une part et les surfaces vis-à-vis de la zone de mélange et de la zone de réaction d'autre part, sont sensiblement égales.

Ces surfaces sont celles déterminées par un plan perpendiculaire à la direction de l'écoulement ou aux canaux.

De façon préférée, elles sont sensiblement égales à la section du réacteur par un plan radial, de sorte que toute la surface du réacteur est utilisée à pleine capacité (Fig. 2B).

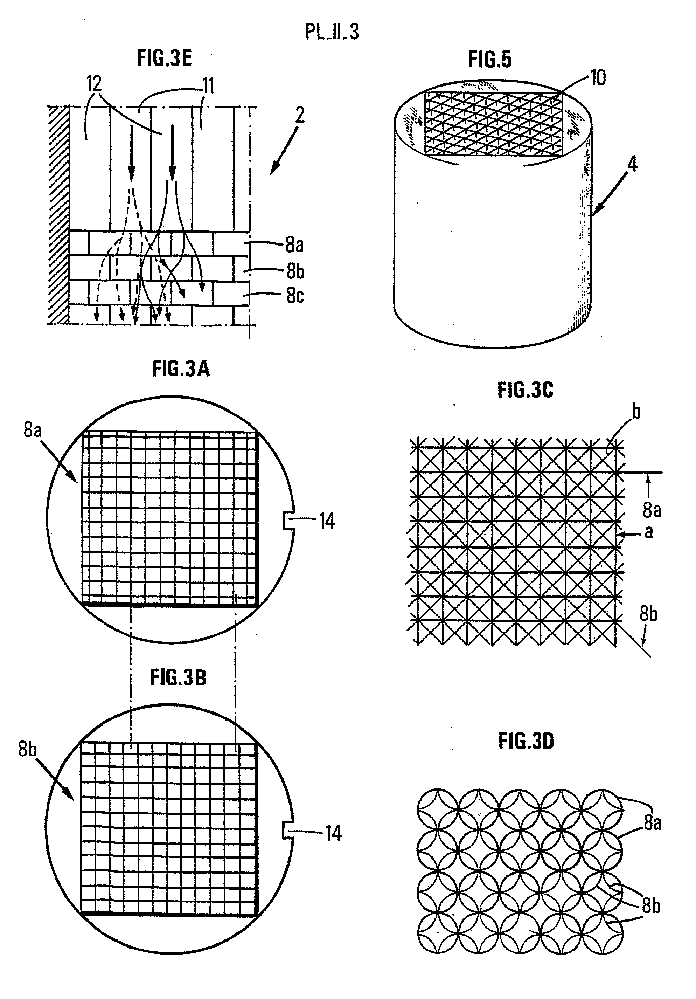

Les figures 3A, 3B, 3C et 3D représentent des modes de réalisation différents du mélangeur 3. Celui-ci comprend en effet une pluralité de disques 8a, 8b, 8c cylindriques, de diamètre de préférence égal à celui du réacteur, et d'épaisseur comprise entre 1 à 10 mm. Chaque disque 8 est garni d'un maillage de canaux (monolithe) de section individuelle qui est comprise entre 0,0025 mm² et 100 mm² et qui correspond à la surface d'un carré dont l'une au moins des dimensions est égale à la distance de coincement de la flamme.

Le maillage de chaque disque est décalé dans les directions x et y du plan, de préférence de $\frac{a}{2}$ si a est le côté du carré.

Les disques sont empilés et maintenus en place par une barrette par exemple, non représentée sur la figure, qui se loge dans une encoche 14 prévue à cet effet. On aboutit ainsi à un cheminement des nappes de fluides représenté par la figure 3E, qui permet un mélange homogène tout en évitant le risque d'emballement et d'explosion de la reaction d'oxydation.

Selon un autre mode de réalisation représenté par la figure 3C, les disques 8a, 8b, par exemple de section carrée quand le monolithe 2 a une section carrée, peuvent être disposés en alternance de telle sorte que l'un des disques ait ses mailles ou canaux orientés suivant la diagonale de l'autre et ainsi de suite.

On peut avantageusement, par exemple, réaliser l'empilement des disques en alternance à 45° avec des tailles de mailles a pour un disque et une taille de maille

$$b = \frac{a\sqrt{2}}{2}$$

pour l'autre disposé à 45°.

Les canaux selon la figure 3D peuvent aussi être ronds et les canaux d'un disque peuvent être décalés par exemple suivant un seul axe du plan ou suivant ses deux axes.

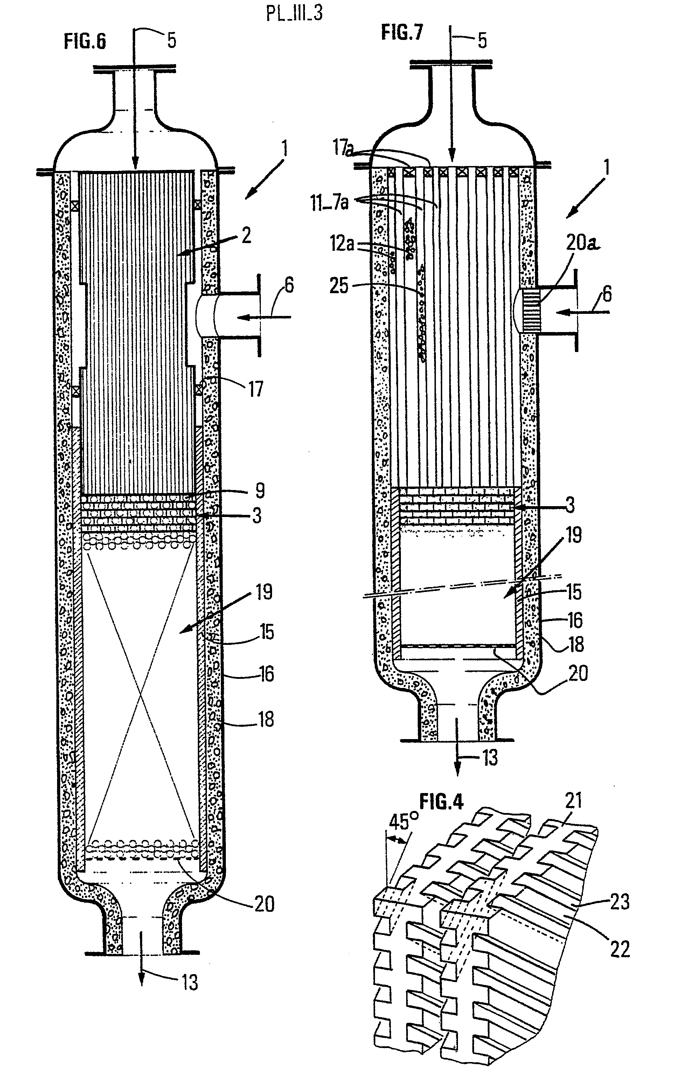

La figure 4 représente un autre exemple de réalisation de l'organe de mélange. Il comprend une pluralité de plaques 21 disposées généralement selon l'écoulement des gaz et avantageusement de façon verticale et parallèlement à l'axe des canaux 7a.

Chaque plaque, dont les dimensions sont par exemple 200 × 50 × 3 mm, est creusée de part et d'autre de canalisations 23 d'environ 1 mm de longueur et 1 mm de profondeur.

Les saillies 22 ainsi déterminées ont sensiblement les mêmes dimensions. Les canalisations 23 sont inclinées d'environ 45° par rapport à l'axe du réacteur ou à l'écoulement des fluides sur une de ses faces et sensiblement du même angle, mais en direction opposée sur l'autre face. Elles peuvent être juxtaposées de façon que les faces en contact de deux plaques adjacentes présentent des canalisations croisées, ce qui favorise efficacemment le mélange des fluides.

Dans l'exemple représenté sur la figure 4, on a cependant écarté les deux plaques pour mieux illustrer le croisement des canalisations 23.

A la sortie du mélangeur, le mélange de gaz poursuit la réaction d'oxydation dans la zone réactionnelle représentée par le second monolithe 4 décrit ci-dessus et qui est distant d'au plus 10 mm du mélangeur 3 afin d'éviter tout risque d'emballement de la réaction.

L'ensemble des moyens ou organes 2, 3, 4 décrits sont maintenus dans un manchon 15, par exemple en mullite, et introduits dans une virole 16 en acier recouverte de béton réfractaire 18 suivant une technique bien connue. Des joints 17 en fibre réfractaire disposés de part et d'autre de l'évidement permettent d'isoler la charge oxydable et le gaz oxydant.

La réalisation de l'étanchéité par des joints serrés entre le monolithe et la virole métallique recouverte de béton réfractaire est une technique intéressante car elle évite des raccordements entre conduits céramiques et conduits métalliques qui, compte-tenu des contraintes thermiques lors du chauffage ou du refroidissement favorisent la rupture du matériau céramique.

Cette technique permet également de raccorder plusieurs monolithes sans avoir à utiliser un collage de ces monolithes ou un raccordement céramique-céramique par brides avec étanchéité par serrage des brides.

Lorsqu'on a affaire à des réactions d'oxydation sous pression et stoechiométriques qui nécessitent des distances de coincement de flamme très faibles difficilement réalisables sur le plan technologique, il est possible, selon un autre mode de réalisation comme le montre la figure 6, de remplir le réacteur 1 au moins en partie, par exemple la zone de mélange et surtout la zone réactionnelle 4, de billes en céramique 19 ou par toute autre forme de garnissage comportant par exemple des bâtonnets en céramique, de dimensions choisies en fonction de la distance de coincement et qui seront retenus par une grille 20 ou un catalyseur.

Suivant un autre mode de réalisation de la zone de distribution illustré par la figure 7, le réacteur peut comprendre au moins une rangée 11 comportant au moins un canal 7a et reliée aux moyens d'alimentation 5 et tout autour de la rangée 11 un garnissage 12a relié aux moyens d'alimentation 6 et comportant des éléments particulaires de taille comprise entre 0,01 et 10 mm permettant des espaces dont les passages ont une dimension au plus égale à 10 mm.

Une grille 20a retient les éléments particulaires dans le réacteur. Les rangées 11 de canaux sont remplis d'éléments particulaires 25 si les dimensions des canaux ne sont pas compatibles avec la distance de coincement de flamme.

Des joints 17a en fibre refractaire disposés entre chaque rangée 11 permettent d'isoler la charge oxydable du gaz oxydant et peuvent être facilement enlevés pour le chargement ou le déchargement du garnissage.

Grâce à ces dispositions et aux matériaux utilisés, on parvient à réaliser des réactions d'oxydation à des températures très élevées de l'ordre de 1300° par exemple, sans dépôt inopportun de carbone et avec des temps de séjour dans le réacteur n'excédant pas par exemple 1000 ms, tout en protégant le réacteur de la chaleur dégagée lors de la réaction.

L'exemple qui suit est donné à titre illustratif:

**EXEMPLE:**

On réalise un réacteur 1 vertical de forme tubulaire comportant:
- un premier monolithe 2 en carbure de silicium de 170 mm de longueur, de section ronde (diamètre = 40 mm) et dont la section de chaque canal est de 0,64 mm² (l'épaisseur d'une cloison est de 0,1 mm).

Sur l'une des faces du monolithe représentant la partie supérieure on bouche à l'aide d'une pâte céramique, une partie des canaux de manière à obtenir un carré de 26 mm de côté. Dans ce carré, on bouche alternativement deux rangées de canaux sur quatre.

Ensuite, on évide sur 30 mm, à partir de la cote 60 mm prise à partir du mélangeur 3, le monolithe 2 sur deux faces opposées dans l'axe du tuyau d'arrivée de l'oxygène en tant que gaz oxydant. La profondeur de l'évidement au milieu de celui-ci est de 7 mm, de manière à se trouver à l'aplomb du carré défini ci-dessus.

On perce sur les parois ainsi mises à jour des fentes dont l'emplacement correspond aux rangées de canaux bouchés sur la face supérieure du monolithe. On fait s'écouler la charge oxydable et l'oxygène sous une pression de 10 bars.

Les canaux dégagés à la base de l'évidement sont également bouchés pour éviter que l'oxygène ne pénètre dans le réacteur par ces canaux.
- un mélangeur 3 de même surface que le monolithe 2 formé de monolithes en mullite de même maille que ci-dessus, soit 0,64 mm² de section, de 5 mm d'épaisseur et plaqué contre le premier monolithe. On alterne, comme décrit ci-dessus, vingt monolithes dont le centre correspond au croisement de deux parois de canaux et vingt monolithes dont le centre correspond au centre d'un canal.
- un second monolithe 4 en mullite dont la section de chaque canal est de 0,64 mm², d'une longueur de 450 mm et de même surface que le mélangeur 3. Ce monolithe est en contact avec le mélangeur.

L'ensemble du réacteur 2, 3, 4 est tenu par un manchon en mullite de 635 mm de longueur.

Dans le réacteur tel que décrit ci-dessus et fonctionnant sous 10 bars, on introduit par la ligne supérieure 5 une charge oxydable comprenant un mélange de gaz à 400°C et dont la composition est la suivante:

|  | Moles |
| --- | --- |
| — Méthane | 25,55 |
| — Hydrogène | 42,74 |
| — Bioxyde de carbone | 8,18 |
| — Monoxyde de carbone | 6,09 |
| — Eau | 46,76 |

On injecte par le canal tubulaire radial 6, 13,20 moles d'oxygène pur à 150°C.

En sortie de réacteur, la température est de 940°C. Le produit a la composition suivante:

|  | Moles |
| --- | --- |
| — Méthane | 4,18 |
| — Hydrogène | 82,50 |
| — Dioxyde de carbone | 10,21 |
| — Monoxyde de carbone | 25,38 |
| — Eau | 49,73 |

## Revendications

1. Procédé d'oxydation d'une charge oxydable en phase gazeuse par un mélange de gaz contenant au moins un gaz oxydant, caractérisé par les étapes successives suivantes:

a) on fait circuler simultanément la charge oxydable et le gaz oxydant dans une zone de distribution en matière céramique comprenant au moins une rangée de canaux d'un premier type de façon que l'un des deux gaz constitués respectivement par la charge oxydable et le gaz oxydant circule de manière séparée à l'intérieur de ladite rangée et de façon que l'autre gaz circule de manière séparée à l'extérieur de ladite rangée, la charge oxydable et le gaz oxydant parcourant dans au moins une partie de ladite zone une multiplicité d'espaces présentant des passages ayant, suivant au moins une direction, une dimension au plus égale à 10 millimètres correspondant à la distance de coincement de la flamme pouvant résulter de l'oxydation de ladite charge par le gaz oxydant,

b) on mélange ensuite ladite charge oxydable et ledit gaz oxydant ainsi distribués dans une zone de mélange en matière céramique définissant une multiplicité d'espaces présentant des passages ayant, suivant au moins une direction, une dimension comparable à celle des passages de l'étape a), et

c) on fait réagir le mélange de produits de l'étape b) dans une zone de réaction en matière céramique comprenant une multiplicité d'espaces présentant des passages ayant, suivant au moins une direction, une dimension comparable à celle des passages définis dans les étapes a) et b), la distance entre la zone de distribution et la zone de mélange d'une part et entre la zone de mélange et la zone de réaction d'autre part, étant au plus égale à ladite distance de coincement de la flamme.

2. Procédé selon la revendication 1, caractérisé en ce que l'on fait circuler l'autre gaz à l'extérieur de ladite rangée à travers un premier garnissage.

3. Procédé selon la revendication 2, caractérisé en ce que ledit premier garnissage comprend au moins une rangée de canaux d'un second type.

4. Procédé selon la revendication 2, caractérisé en ce que ledit premier garnissage comprend des éléments particuliers.

5. Procédé selon la revendication 2, caractérisé en ce que l'arrivée de la charge oxydable dans les rangées du premier type de canaux destinées à la répartir dans la zone de distribution, s'effectue dans une direction sensiblement perpendiculaire à l'axe desdites rangées en un point intermédiaire situé à une distance de la zone de mélange comprise entre 40 et 95% de la longueur totale de la zone de distribution et en ce que l'arrivée du gaz oxydant dans ledit garnissage destiné à le distribuer dans la zone de distribution s'effectue selon l'axe desdites rangées.

6. Procédé selon la revendication 2, caractérisé en ce que l'arrivée de la charge oxydable dans les rangées du premier type de canaux destinées à la répartir dans la zone de distribution s'effectue selon l'axe desdites rangées et en ce que l'arrivée du gaz oxydant dans ledit garnissage destiné à le répartir dans la zone de distribution s'effectue dans une direction sensiblement perpendiculaire à l'axe desdits canaux du premier type en un point intermédiaire situé à une distance de la zone de mélange comprise entre 40 et 95% de la longueur totale de la zone de distribution.

7. Procédé selon l'une quelconque des revendications 1 à 6, caractérisé en ce que le gaz oxydant est l'oxygène.

8. Réacteur d'oxydation pour la mise en oeuvre du procédé selon la revendication 1 comportant des moyens d'alimentation en gaz oxydant (6), des moyens d'alimentation en charge oxydable (5) et des moyens d'évacuation des produits réactionnels (13), caractérisé en ce qu'il comprend sur une partie au moins de sa section, des organes de distribution (2) en matière céramique comportant au moins une rangée (11) d'au moins un canal d'un premier type (7, 7a) reliée aux moyens d'alimentation (5) d'un des deux gaz (charge oxydable ou gaz oxydant) et à l'intérieur duquel circule ledit gaz, lesdits moyens de distribution comportant à l'extérieur dudit canal un premier garnissage (12a) relié aux moyens d'alimentation (6) de l'autre gaz, l'intérieur dudit canal étant rempli en outre d'un second garnissage (25), lesdits garnissages (12a, 25) étant adaptés à définir dans au moins une partie des moyens de distribution une multiplicité d'espaces présentant des passages ayant, suivant au moins une direction, une dimension au plus égale à 10 mm, ladite rangée (11) et ledit premier garnissage (12a) étant adaptés notamment à distribuer des nappes distinctes de la charge oxydable et de gaz oxydant dans un organe de mélange (3) en matière céramique par leur extrémité la plus proche dudit organe de mélange, ledit organe de mélange étant adapté à mélanger ladite charge et ledit gaz oxydant et à définir tout le long dudit organe de mélange (3) une multiplicité d'espaces présentant des passages ayant, suivant au moins une direction, une dimension au plus égale à 10 mm, ledit organe de mélange (3) étant situé à une distance au plus égale à 10 mm d'une part de l'extrémité de ladite rangée (11) du canal et dudit premier garnissage (12a) et d'autre part d'un organe de réaction (4) en matière céramique comportant ledit second garnissage en matière céramique adapté à définir dans au moins une partie des organes de réaction une multiplicité d'espaces présentant des passages ayant, suivant au moins une direction, une dimension au plus égale à 10 mm grâce auxquels les produits réactionnels sont canalisés vers lesdits moyens d'évacuation (13).

9. Réacteur selon la revendication 8, caractérisé en ce que ledit organe de mélange (3) comporte une pluralité d'étages (8a, 8b, 8c...) à mailles sensiblement décalées les unes par rapport aux autres et remplies dudit second garnissage en matière céramique.

10. Réacteur selon la revendication 8, caractérisé en ce que ledit organe de mélange (3) comporte une pluralité de plaques (21) sensiblement verticales comprenant de part et d'autre de chacune d'elles une pluralité de saillies (22) et de canalisations (23) inclinées de manière opposée de part et d'autre de chaque plaque, lesdites plaques étant disposées de telle façon que les saillies (22) et canalisations (23) soient croisées.

11. Réacteur selon l'une quelconque des revendications 8 à 10, caractérisé en ce que ledit organe de mélange (3) présente en section par un plan perpendiculaire à la direction d'écoulement dans ledit canal (7a), une surface au moins égale à celle des organes de distribution (2) et au plus égale à celle des organes de réaction (4).

12. Réacteur selon l'une quelconque des revendications 8 à 10, caractérisé en ce que ledit organe de mélange (3) présente en section par un plan perpendiculaire à la direction d'écoulement dans ledit canal (7a), une surface sensiblement égale vis-à-vis de celle des organes de distribution (2) et vis-à-vis de celle des organes de réaction (4).

13. Réacteur selon l'une quelconque des revendications 8 à 12, caractérisé en ce que les moyens d'alimentation (5) en charge oxydable sont reliés aux canaux du premier type (7a) en un point intermédiaire situé sur une au moins des génératrices du réacteur à une distance de l'organe de mélange (3) comprise entre 40 et 95% de la longueur totale des organes de distribution (2) et en ce que les moyens d'alimentation en gaz oxydant (5) sont reliés au premier garnissage (12a) en un point opposé à l'extrémité la plus proche de l'organe de mélange (3).

14. Réacteur selon l'une quelconque des revendications 8 à 12, caractérisé en ce que les moyens d'alimentation (5) en charge oxydable sont reliés aux canaux du premier type (7a) en un point opposé à l'extrémité la plus proche dudit organe de mélange (3) et en ce que les moyens d'alimentation en gaz oxydant (6) sont reliés au premier garnissage (12a) en un point intermédiaire situé sur une au moins des génératrices du réacteur, à une distance dudit organe de mélange comprise entre 40 et 95% de la longueur totale des organes de distribution.

15. Réacteur selon l'une quelconque des revendications 8 à 14, caractérisé en ce que les premier et second garnissages (12a, 25) comportent au moins un monolithe (2 ou 4) comprenant une pluralité de canaux juxtaposés.

16. Réacteur selon l'une quelconque des revendications 8 à 14, caractérisé en ce que les premier et deuxième garnissages (12a, 25) comprennent des éléments tels que des billes et des bâtonnets en céramique.

17. Réacteur selon la revendication 15, caractérisé en ce que l'un au moins des monolithes (2 ou 4) comprend en outre au moins un remplissage d'éléments tels que des billes et des bâtonnets en céramique.

18. Réacteur selon l'une quelconque des revendications 8 à 17, caractérisé en ce que les garnissages comprennent un catalyseur.

19. Réacteur selon l'une quelconque des revendications 8 à 18, caractérisé en ce que l'un au moins desdits organes (2, 3, 4) comporte au moins en partie un garnissage d'éléments tels que des billes et des bâtonnets en céramique.

20. Utilisation du réacteur selon l'une quelconque des revendications 8 à 19 notamment pour la synthèse de méthanol et d'alcools homologues supérieurs à partir d'oxydes de carbone et d'hydrogène.

**Claims**

1. A method for oxidising a charge which can be oxidised in gaseous phase by a mixture of gases containing at least one oxidising gas, characterised by the following successive stages:

a) the oxidisable charge and the oxidising gas are simultaneously circulated in a distribution zone made of ceramic material comprising at least one row of channels of a first type so that one of the two gases constituted respectively by the oxidisable charge and the oxidising gas circulates separately inside said row and so that the other gas circulates separately outside said row, the oxidisable charge and the oxidising gas passing in at least part of said zone through a multiplicity of spaces exhibiting passages having one dimension in at least one direction at most equal to 10 millimeters corresponding to the arresting distance of the flame capable of resulting from oxidation of said charge by the oxidising gas,

b) said oxidisable charge and said oxidising gas thus distributed are then mixed in a mixing zone made of ceramic material defining a multiplicity of spaces exhibiting passages having one dimension in at least one direction comparable to that of the passages in stage (a), and

c) the mixture of products of stage (b) is made to react in a reaction zone made of ceramic material comprising a multiplicity of spaces exhibiting passages having one dimension in at least one direction comparable to that of the passages defined in stages (a) and (b), the distance between the distribution zone and the mixing zone on the one hand and between the mixing zone and the reaction zone on the other hand being at most equal to said arresting distance for the flame.

2. A method as in claim 1, characterised in that the other gas is circulated outside said row through a first lining.

3. A method as in claim 2, characterised in that said first lining comprises at least one row of channels of a second type.

4. A method as in claim 2, characterised in that said first lining comprises particulate elements.

5. A method as in claim 2, characterised in that the oxidisable charge enters the rows of the first type of channel designed to distribute it in the distribution zone in a direction substantially perpendicular to the axis of said rows at an intermediate point located a distance from the mixing zone of between 40 and 95% of the total length of the distribution zone and in that the oxidising gas enters said lining designed to distribute it in the distribution zone along the axis of said rows.

6. A method as in claim 2, characterised in that the oxidisable charge enters the rows of the first type of channel designed to distribute it in the distribution zone along the axis of said rows and in that the oxidising gas enters said lining designed to distribute it in the distribution zone in a direction substantially perpendicular to the axis of said channels of the first type at an intermediate point located a distance from the mixing zone of between 40 and 95% of the total length of the distribution zone.

7. A method as in any one of claims 1 to 6, characterised in that the oxidising gas is oxygen.

8. An oxidation reactor for implementing the method as in claim 1 comprising means for supplying oxidising gas (6), means for supplying oxidisable charge (5) and means for discharging the reaction products (13), characterised in that over at least part of its section it comprises distribution elements (2) made of ceramic material comprising at least one row (11) of at least one channel of a first type (7, 7a) linked to the means (5) for supplying one of the two gases (oxidisable charge or oxidising gas) and inside which said gas circulates, said distribution means comprising outside said channel a first lining (12a) linked to the means (6) for supplying the other gas, the inside of said channel being additionally filled with a second lining (25), said linings (12a, 25) being adapted to define in at least one part of the distribution means a multiplicity of spaces exhibiting passages having one dimension in at least one direction at most equal to 10 mm, said row (11) and said first lining (12a) being adapted in particular to distribute separate sheets of the oxidisable charge and oxidising gas in a mixing element (3) made of ceramic material through their end nearest said mixing element, said mixing element being adapted to mix said charge and said oxidising gas and to define all along said mixing element (3) a multiplicity of spaces exhibiting passages having one dimension in at least one direction at most equal to 10 mm, said mixing element (3) being located a distance at most equal to 10 mm firstly from the end of said row (11) of the channel and said first lining (12a) and secondly from a reaction elements (4) made of ceramic material comprising said second lining made of ceramic material adapted to define in at least one part of the reaction element a multiplicity of spaces exhibiting passages having one dimension in at least one direction at most equal to 10 mm by virtue of which the reaction products are channelled towards said discharge means (13).

9. A reactor as in claim 8, characterised in that said mixing element (3) comprises a plurality of stages (8a, 8b, 8c...) with holes substantially offset in relation to one another and filled with said second lining made of ceramic material.

10. A reactor as in claim 8, characterised in that said mixing element (3) comprises a plurality of substantially vertical plates (21) comprising on either side of each of them a plurality of projections (22) and passages (23) inclined in opposition on either side of each plate, said plates being disposed so that the projections (22) and passages (23) are crossed.

11. A reactor as in any one of claims 8 to 10, characterised in that in section through a plane perpendicular to the direction of flow in said channel (7a) said mixing element (3) exhibits a surface at least equal to that of the distribution elements (2) and at most equal to that of the reaction elements (4).

12. A reactor as in any one of claims 8 to 10, characterised in that in section through a plane perpendicular to the direction of flow in said channel (7a) said mixing element (3) exhibits a substantially equal surface facing that of the distribution elements (2) and facing that of the reaction elements (4).

13. A reactor as in any one of claims 8 to 12, characterised in that the means (5) for supplying oxidisable charge are linked to the channels of the first type (7a) at an intermediate point located on at least one of the generating lines of the reactor a distance from the mixing element (3) of between 40 and 95% of the total length of the distribution elements (2) and in that the means (5) for supplying oxidising gas are linked to the first lining (12a) at a point opposite the end nearest the mixing element (3).

14. A reactor as in any one of claims 8 to 12, characterised in that the means (5) for supplying oxidisable charge are linked to the channels of the first type (7a) at a point opposite the end nearest said mixing element (3) and in that the means (6) for supplying oxidising gas are linked to the first lining (12a) at an intermediate point located on at least one of the generating lines of the reactor a distance from said mixing element of between 40 and 95% of the total length of the distribution elements.

15. A reactor as in any one of claims 8 to 14, characterised in that the first and second linings (12a, 25) comprise at least one monolith (2 or 4) comprising a plurality of juxtaposed channels.

16. A reactor as in any one of claims 8 to 14, characterised in that the first and second linings (12a, 25) comprise elements such as balls and short rods of ceramic material.

17. A reactor as in claim 15, characterised in that at least one of the monoliths (2 or 4) additionally comprises at least one filling of elements such as balls and short rods of ceramic material.

18. A reactor as in any one of claims 8 to 17, characterised in that the linings comprise a catalyst.

19. A reactor as in any one of claims 8 to 18, characterised in that at least in part at least one of said elements (2, 3, 4) comprises a lining of elements such as balls and short rods of ceramic material.

20. Use of the reactor as in any one of claims 8 to 19 in particular for synthesis of methanol and higher homologous alcohols from oxides of carbon and hydrogen.

**Patentansprüche**

1. Verfahren zum Oxidieren einer oxidierbaren Charge in der Gasphase durch ein wenigstens ein oxidierendes Gas enthaltendes Gasgemisch, gekennzeichnet durch die nachfolgenden aufeinanderfolgenden Stufen:

a) man läß gleichzeitig die oxidierbare Charge sowie das oxidierende Gas in einer aus keramischem Material bestehenden Verteilerzone zirkulieren, die wenigstens eine Reihe von Kanälen eines ersten Typs umfaßt, derart, daß eines der beiden Gase, die jeweils durch die oxidierbare Charge und das oxidierende Gas gebildet ist, im Innern dieser Reihe zirkuliert und zwar derart, daß das andere Gas getrennt außerhalb dieser Reihe zirkuliert, wobei die oxidierbare Charge und das oxidierende Gas in wenigstens einem Teil dieser Zone eine Vielzahl von Räumen durchströmen, welche Durchlässe haben, die längs wenigstens einer Richtung eine Abmessung haben, die höchstens gleich 10 mm entsprechend dem Festkeilabstand der Flamme sind, die aus der Oxidation dieser Charge durch das oxidierende Gas resultieren kann,

b) man mischt dann diese oxidierbare Charge und dieses oxidierende Gas, die so in einer Mischzone aus keramischem Material verteilt sind, die eine Vielzahl von Räumen bildet, die Durchlässe haben, die längs wenigstens einer Richtung eine Abmessung vergleichbar der der Durchlässe der Stufe a) haben, und

c) man läßt das Gemisch aus Produkten der Stufe b) in einer Reaktionszone aus keramischem Material reagieren, die eine Vielzahl von Räumen aufweist, die Durchlässe haben, welche längs wenigstens einer Richtung eine Abmessung haben, die vergleichbar der der Durchlässe ist, die in den Stufen a) und b) definiert wurden, wobei die Entfernung zwischen der Verteilerzone und der Mischzone einerseits und zwischen der Mischzone und der Reaktionszone andererseits höchstens gleich diesem Festkeilabstand der Flamme sind.

2. Verfahren nach Anspruch 1, dadurch gekennzeichnet, daß man das andere Gas außerhalb dieser Reihe quer durch eine erste Auskleidung strömen läßt.

3. Verfahren nach Anspruch 2, dadurch gekennzeichnet, daß diese Auskleidung wenigstens eine Reihe von Kanälen eines zweiten Typs umfaßt.

4. Verfahren nach Anspruch 2, dadurch gekennzeichnet, daß diese erste Auskleidung besondere Elemente umfaßt.

5. Verfahren nach Anspruch 2, dadurch gekennzeichnet, daß der Eintritt der oxidierbaren Charge in die Reihen vom ersten Typ von Kanälen, die dazu bestimmt sind, sie in der ersten Verteilerzone zu verteilen, in einer Richtung im wesentlichen senkrecht zur Achse dieser Reihen an einem Zwischenpunkt erfolgt, der unter einem Abstand zur Mischzone zwischen 40 und 95% der Gesamtlänge der Verteilerzone beträgt und daß die Zuführung oxidierenden Gases in dieser Auskleidung, die dazu bestimmt ist, es in der Verteilerzone zu verteilen, längs der Achse dieser Reihen erfolgt.

6. Verfahren nach Anspruch 2, dadurch gekennzeichnet, daß die Zufuhr der oxidierbaren Charge in die Reihen vom ersten Typ von Kanälen, die dazu bestimmt sind, sie in der Verteilerzone zu verteilen, längs der Achse dieser Reihen erfolgt und daß die Zufuhr des oxidierenden Gases in diese Auskleidung, die dazu bestimmt ist, es in der Verteilerzone zu verteilen, in einer Richtung im wesentlichen senkrecht zur Achse dieser Kanäle vom ersten Typ an einer Zwischenstelle erfolgt, die unter einem Abstand zur Mischzone sich befindet, die zwischen 40 und 95% der Gesamtlänge der Verteilerzone ausmacht.

7. Verfahren nach einem der Ansprüche 1 bis 6, dadurch gekennzeichnet, daß das oxidierende Gas Sauerstoff ist.

8. Oxidationsreaktor zur Durchführung des Verfahrens nach Anspruch 1, mit Einrichtungen zur Zufuhr oxidierbaren Gases (6), Einrichtungen zur Zufuhr von oxidierbarer Charge (5) sowie Einrichtungen zum Abziehen der Reaktionsprodukte (13), dadurch gekennzeichnet, daß er auf wenigstens einem Teil seines Querschnittes Verteilerorgane (2) aus keramischem Material aufweist, die wenigstens eine Reihe (11) wenigstens eines Kanals von einem ersten Typ (7, 7a) umfaßt, die mit den Speiseeinrichtungen (5) eines der beiden Gase (oxidierbare Charge oder oxidierendes Gas) verbunden ist und in dessen Innerem dieses Gas zirkuliert, wobei diese Verteilereinrichtungen außerhalb dieses Kanals eine erste Auskleidung (12a) umfassen, die mit den Speiseeinrichtungen (6) für das andere Gas verbunden ist, wobei das Innere dieses Kanals im übrigen mit einer zweiten Auskleidung (25) gefüllt ist und diese Auskleidungen (12a, 25) so ausgelegt sind, daß sie in wenigstens einem Teil der Verteilereinrichtungen eine Vielzahl von Räumen mit Durchlässen bilden, die längs wenigstens einer Richtung einer Abmessung höchstens gleich 10 mm haben, wobei diese Reihe (11) und diese erste Auskleidung (12a) insbesondere dazu bestimmt sind, unterschiedliche Bahnen dieser oxidierbaren Charge und oxidierbaren Gases in einem Mischorgan (3) aus keramischem Material über ihr Ende zu verteilen, das diesem Mischorgan am weitesten benachbart ist, wobei das Mischorgan so ausgebildet ist, daß es diese Charge und dieses oxidierbare Gas mischt und längs dieses Mischorgans (3) eine Vielzahl von Räumen bildet, welche Durchlässe haben, die längs wenigstens einer Richtung eine Abmessung höchstens gleich 10 mm haben, wobei das Mischorgan (3) unter einem Abstand angeordnet ist, der höchstens gleich 10 mm einerseits vom Ende dieser Reihe (11) des Kanals und dieser ersten Auskleidung (12a) und andererseits von einem Reaktionsorgan (4) aus keramischem Material angeordnet ist, das diese zweite Auskleidung aus keramischem Material umfaßt, die so ausgelegt ist, daß sie in wenigstens einem Teil der Reaktionsorgane eine Vielzahl von Räumen mit Durchlässen bildet, die längs wenigstens einer Richtung eine Abmessung haben, die höchstens gleich 10 mm ist und aufgrund deren die Reaktionsprodukte gegen diese Abzugseinrichtungen (13) kanalisiert werden.

9. Reaktor nach Anspruch 8, dadurch gekennzeichnet, daß dieses Mischorgan (3) eine Vielzahl von Stufen (8a, 8b, 8c...) mit bezüglich einander im wesentlichen versetzten Maschen, die mit dieser zweiten Auskleidung aus keramischem Material gefüllt sind, umfaßt.

10. Reaktor nach Anspruch 8, dadurch gekennzeichnet, daß dieses Mischorgan (3) eine Vielzahl von im wesentlichen vertikalen Platten (21) umfaßt, die zu beiden Seiten einer jeden eine Vielzahl von Vorsprüngen (22) und Kanälen (23) umfassen, die einander entgegengesetzt auf beiden Seiten jeder Platte geneigt sind, wobei diese Platten derart angeordnet sind, daß die Vorsprünge (22) und Kanäle (23) sich kreuzen.

11. Reaktor nach einem der Ansprüche 8 bis 10, dadurch gekennzeichnet, daß dieses Mischorgan (3) in einem Schnitt längs einer Ebene senkrecht zur Strömungsrichtung in diesem Kanal (7a) eine Fläche aufweist, die wenigstens gleich der der Verteilerorgane (2) und höchstens gleich der der Reaktionsorgane (4) ist.

12. Reaktor nach einem der Ansprüche 8 bis 10, dadurch gekennzeichnet, daß dieses Mischorgan (3) im Schnitt längs einer Ebene senkrecht zur Strömungsrichtung in diesem Kanal (7a) eine Fläche aufweist, die im wesentlichen gleich gegenüber derjenigen der Verteilerorgane (2) und gegenüber derjenigen der Reaktionsorgane (4) ist.

13. Reaktor nach einem der Ansprüche 8 bis 12, dadurch gekennzeichnet, daß die Speiseeinrichtungen (5) mit oxidierbarer Charge mit den Kanälen vom ersten Typ (7a) an einer Zwischenstelle verbunden sind, die sich auf wenigstens einer der Erzeugenden des Reaktors unter einem Abstand zum Mischorgan (3) befindet, der zwischen 40 bis 90% der Gesamtlänge der Verteilerorgane (2) umfaßt und daß die Zuführeinrichtungen für oxidierbares Gas (5) mit der ersten Auskleidung (12a) an einer Stelle verbunden sind, die dem nächsten Ende des Mischorgans (3) gegenüberliegt.

14. Reaktor nach einem der Ansprüche 8 bis 12, dadurch gekennzeichnet, daß die Einrichtungen (5) zum Speisen mit oxidierbarer Charge mit den Kanälen vom ersten Typ (7a) an einer Stelle verbunden sind, die dem am nächsten liegenden Ende des Mischorgans (3) gegenüberliegt und daß die Speiseeinrichtungen mit oxidierbarem Gas (6) mit der ersten Verkleidung (12a) an einem Zwischenpunkt verbunden sind, der auf wenigstens einer der Erzeugenden des Reaktors unter einem Abstand von diesem Mischorgan sich befindet, der zwischen 40 und 95% der Gesamtlänge der Verteilerorgane ausmacht.

15. Reaktor nach einem der Ansprüche 8 bis 14, dadurch gekennzeichnet, daß die ersten und zweiten Auskleidungen (12a, 25) wenigstens ein monolithisches Bebilde (2 oder 4) umfassen, das eine Vielzahl nebeneinander liegender Kanäle aufweist.

16. Reaktor nach einem der Ansprüche 8 bis 14, dadurch gekennzeichnet, daß die ersten und zweiten Auskleidungen (12a, 25) Elemente wie Kugeln und Stäbchen aus Keramik umfassen.

17. Reaktor nach Anspruch 15, dadurch gekennzeichnet, daß wenigstens eines der monolithischen Gebilde (2 oder 4) im übrigen wenigstens eine Füllung mit Elementen wie Kugeln und Stäbchen aus Keramik umfaßt.

18. Reaktor nach einem der Ansprüche 8 bis 17, dadurch gekennzeichnet, daß die Auskleidungen einen Katalysator umfassen.

19. Reaktor nach einem der Ansprüche 8 bis 18, dadurch gekennzeichnet, daß wenigstens eines dieser Organe (2, 3, 4) wenigstens zum Teil eine Auskleidung aus Elementen wie Kugeln und Stäbchen aus Keramik umfaßt.

20. Verwendung des Reaktors nach einem der Ansprüche 8 bis 19 insbesondere zur Synthese von Methanol und homologen höheren Alkoholen, ausgehend von Oxiden des Kohlenstoffs und Wasserstoffs.

PL_I_3

**FIG.1**

**FIG.2A**

**FIG.2 B**

PL_II_3

**FIG.3E**

**FIG.5**

**FIG.3A**

**FIG.3C**

**FIG.3B**

**FIG.3D**

PL_III_3

FIG.6

FIG.7

FIG.4